# EUROPEAN PATENT SPECIFICATION

(11) **EP 2 407 508 B1**
(45) Date of publication and mention of the grant of the patent: **17.12.2014**
(21) Application number: 10722902.3
(22) Date of filing: 10.03.2010
(51) Int. Cl.: C08L 23/00, B32B 27/28, B32B 27/32, C08K 3/26, C08K 5/01, C08K 5/098, C08L 23/26, C08L 29/04, C08L 23/10, B32B 27/30, C08L 23/02, C08L 23/08, B32B 27/08

(54) **RESIN COMPOSITION AND MULTILAYERED STRUCTURE USING THE SAME**
HARZZUSAMMENSETZUNG UND MEHRSCHICHTIGE STRUKTUR DAMIT
COMPOSITION DE RÉSINE ET STRUCTURE MULTICOUCHE L'UTILISANT

(30) Priority: 11.03.2009 JP 2009058076
(43) Date of publication of application: 18.01.2012
(73) Proprietor: Kuraray Co., Ltd., Okayama 710-0801 (JP)
(72) Inventor: KAZETO, Osamu, Kurashiki-shi Okayama 713-8550 (JP)
(74) Representative: Müller-Boré & Partner Patentanwälte PartG mbB
(86) International application number: PCT/JP2010/054029
(87) International publication number: WO 2010/071241

(56) References cited:
- EP-A1- 0 751 153
- EP-A2- 0 401 666
- EP-A2- 1 067 154
- EP-A2- 2 275 481
- JP-A- 3 072 542
- JP-A- 9 071 620
- JP-A- 10 001 570
- JP-A- 53 039 380

## Description

The present invention relates to a resin composition comprising a polyolefin, and a saponified ethylene-vinyl acetate copolymer (may be abbreviated as "EVOH" hereinafter) which is improved in preventing the formation of film surface anomalies arising from insufficient dispersion of EVOH at the time of melt-molding the resin compositions, more specifically to a resin composition which is improved in formation of EVOH aggregates at a micro-scale level and formation of wavy patterns on the surface of molded articles; and relates also to a multilayered structure including a layer comprising such a resin composition.

Resin compositions made by blending polyolefins and EVOH are well known (see Patent Document 1). However, these resin compositions are generally poor in compatibility with each other and, hence, when formed into film, sheet, bottle or the like by extrusion molding, the compositions tend to generate nonuniform phase-separated foreign matters. The number of the foreign matters increases particularly during long periods of operation and the appearance of the molded articles is significantly impaired (reduction of long-run processability). It is known that blending higher fatty acid metal salts having 8 to 22 carbon atoms, ethylenediaminetetraacetate metal salts, and/or such as hydrotalcite compounds is effective in improving the insufficient compatibility between polyolefin and EVOH (see Patent Documents 1 and 2). In addition to the combination, it is disclosed that, in addition to blending hydrotalcite based compounds and higher fatty acid metal salts having 8 carbon atoms or more in the mixture of a polyolefin and an EVOH, the addition of boron compounds, phosphoric acids and/or alkali (alkali-earth) hydrogen phosphates, or lower fatty acid metal salts having 7 carbon atoms or less, or the like, improves long-run processability and heat resistance of compositions mainly comprising a polyolefin and an EVOH at the time of melt-molding (physical property retention at repeated heating accompanying recycling) (see Patent Documents 3, 4 and 5). In these documents, however, the evaluation of fish-eye formation at the time of film molding is done by observing the number of fish-eye particles having a diameter of 0.2 mm or more formed per 100 cm².

It is also disclosed that saponified ethylene-vinyl acetate copolymers having an ethylene content of 68 to 98 mol% and having a degree of saponification of vinyl acetate units of 20% or more (may be abbreviated as S-EVOH hereinafter) may be blended as resin compositions capable of preventing wavy pattern formation on the molded articles surface in addition to using at least one component selected from higher fatty acid metal salts having 8 to 22 carbon atoms, ethylenediaminetetraacetate metal salts, and hydrotalcites described above to a polyolefin and an EVOH, at the time of melt-molding resin compositions comprising a polyolefin and an EVOH. The wavy patterns arise from flow anomalies due to insufficient compatibility at the time of melt-molding. In this manner, the compatibility of the obtained resin compositions is improved and the wavy patterns on the molded article surface are prevented, and thus the effective reuse of scrap compositions such as regrinds is disclosed (see Patent Document 6).

It has also been disclosed that by adding an acid graft-modified polyolefin based resin and a polyalcohol compound to recycled materials of layered products including thermoplastic resin layers and EVOH layers, the resin compositions showing no gelation at the time of melt-molding, producing no wavy patterns or fish-eyes on the molded articles, having an excellent long-run processability, and capable of preventing the phase-separated foreign matter (lip stain), can be obtained (see Patent Document 7). However, in this document, evaluation of fish-eye formation is done by observing the number of fish-eye particles having a diameter of 0.4 mm or more formed per 100 cm² in the regrind layer of the layered products.

In addition, a method for manufacturing vinyl acetate based polymers by the addition of a conjugated polyene compound having a boiling point of 20°C or more to an ethylene-vinyl acetate copolymer, and a method for manufacturing saponified vinyl acetate based polymers by the saponification of the vinyl acetate based polymers obtained in this method, have also been disclosed. EVOH obtained by these methods is considered of high quality showing minimal coloration and minimal formation of gel-like hard spots at the time of molding (see Patent Document 8).

According to the arts disclosed in Patent Documents 2 to 7, compatibility between EVOH and polyolefin in the resin compositions made by blending polyolefin and EVOH can be greatly improved, resulting in improved appearance of the molded articles. However, in the current environment-responsive trend (volume reduction of packaging materials and waste materials), demand for thinning of cups, bottles and films is on the increase. Therefore, the need for reducing the poor appearance due to insufficient dispersion at a more micro-scale level and flow anomalies of resin compositions made by blending polyolefin and EVOH is also increasing. For traditional packaging materials, which were relatively thick, there were no such problems because of the low transparency and the like. It should be noted that in the "poor appearance", a bow-like wavy pattern (flow mark) perpendicular to a flow of molten resin is observed during molding of the resin, and thus, the poor appearance herein differs from a linearly-created poor appearance, such as a die line, which runs parallel to the flow of the molten resin, resulting from retention and adhesion of the deteriorated resin to and outside the dice.

In Patent Document 8, the art of reducing the gel-like hard spots in molded articles made of EVOH alone is disclosed. No mention or hint of resin compositions made by blending EVOH and polyolefin is found.

### [Prior art documents]

### [Patent Document]

[Patent Document 1] Laid-open Japanese patent publication No. S60-199040
[Patent Document 2] Laid-open Japanese patent publication No. H06-087195
[Patent Document 3] Laid-open Japanese patent publication No. H10-001569
[Patent Document 4] Laid-open Japanese patent publication No. H10-001570
[Patent Document 5] Laid-open Japanese patent publication No. H09-278952
[Patent Document 6] Laid-open Japanese patent publication No. H03-72542
[Patent Document 7] Laid-open Japanese patent publication No. 2008-115367
[Patent Document 8] Laid-open Japanese patent publication No. H09-71620

The present inventors have found that the film surface anomalies (flow mark), which appear at the time of melt-molding the resin composition made by blending a polyolefin and an EVOH, and which impair the appearance, are caused by insufficient dispersion of EVOH, or more specifically, the formation of EVOH aggregates at a micro-scale level.

Accordingly, the objects of the present invention are to improve the dispersibility of EVOH by suppressing the formation of aggregates at a micro-scale level, to reduce the occurrences of poor appearance such as wavy patterns on the molded article surface caused by flow anomalies due to the aggregates, and thus to effectively reuse the layered product comprising the polyolefin layer and the EVOH layer, or other such as scrap portion, as a regrind layer, and finally to obtain molded articles with good appearance.

According to the present invention, the above-described object can be achieved by providing a resin composition comprising: a polyolefin (A) selected from the group consisting of polyethylene, ethylene based copolymers prepared by copolymerization of ethylene and α-olefins or acrylic esters, polypropylene, propylene based copolymers prepared by copolymerization of propylene and α-olefins, modified polypropylenes blended with rubber based polymers, poly(1-butene), poly(4-methyl-1-pentene), modified polyolefins prepared by reacting the above-listed polyolefins with maleic anhydride, and ionomer resins; a saponified ethylene-vinyl acetate copolymer (B) having an ethylene content of 20 to 65 mol% and having a degree of saponification of vinyl acetate units of 96% or more (hereinafter simply "EVOH (B)"); a higher fatty acid metal salt (C) having 8 to 22 carbon atoms (hereinafter simply "higher fatty acid metal salt (C)"); and a conjugated polyene compound (D) having a boiling point of 20°C or higher (hereinafter simply "conjugated polyene compound (D)"); wherein the mass ratio (A : B) of the polyolefin (A) and the EVOH (B) is 60 : 40 to 99.9 : 0.1, the amount of the higher fatty acid metal salts (C) is in the range of 0.0001 to 10 parts by mass per 100 parts by mass of the total of the polyolefin (A) and the EVOH (B), and the amount of conjugated polyene compound (D) is in the range of 0.000001 to 1 part by mass per 100 parts by mass of the total of the polyolefin (A) and the EVOH (B).

A resin composition obtained as follows is also a preferable embodiment of the present invention: a resin composition obtained by further containing in the above resin composition a hydrotalcite compound (E) in the range of 0.0001 to 10 parts by mass per 100 parts by mass of the total of the polyolefin (A) and the EVOH (B).

A resin composition obtained as follows is also a preferred embodiment of the present invention: a resin composition obtained by further containing 0.3 part by mass or more of a saponified ethylene-vinyl acetate copolymers (F) having an ethylene content of 68 to 98 mol% and having a degree of saponification of vinyl acetate units of 20% or more (hereinafter simply "S-EVOH (F)"), per 100 parts by mass of the total of the polyolefin (A) and the EVOH (B), in any one of the above-described two resin compositions.

A preferable embodiment of the present invention also is a multilayered structure having at least two layers comprising a layer made of any one of the above-described resin compositions, and a layer made of a saponified ethylene-vinyl acetate copolymer having an ethylene content of 20 to 65 mol% and having a degree of saponification of vinyl acetate units of 96% or more.

The present invention offers resin compositions capable of suppressing the formation of EVOH aggregates at the micro-scale levels to improve the dispersibility and reducing the occurrences of the flow mark due to flow anomalies caused by the aggregates. The resin composition of the present invention can be used as a recycled regrind layer even from scraps, etc., of layered products having the polyolefin layer and the EVOH layer. Even in this case, molded articles without defects in the appearance can be obtained. The molded articles made from the resin composition of the present invention is capable of achieving the remarkable improvement on the appearance when, in particular, the thickness is small.

The resin composition of the present invention contains polyolefin (A), EVOH (B), higher fatty acid metal salt (C), and conjugated polyene compound (D). The mass ratio of polyolefin (A) and EVOH (B), (A: B), is 60 : 40 to 99.9 : 0.1. The amount of higher fatty acid metal salts (C) contained is in the range of 0.0001 to 10 parts by mass per 100 parts by mass of the total of polyolefin (A) and EVOH (B). The amount of conjugated polyene compound (D) is in the range of 0.000001 to 1 part by mass per 100 parts by mass of the total of polyolefin (A) and EVOH (B).

Polyolefin (A) used in the present invention is selected from the group consisting of polyethylene (low density, linear low density, medium density, and high density); ethylene based copolymers prepared by copolymerization of ethylene and α-olefins such as 1-butene, 1-hexene and 4-methyl-1-pentene, or acrylic esters; polypropylene (homo polypropylene, random polypropylene, block polypropylene, etc.); propylene based copolymers prepared by copolymerization of propylene and α-olefins such as ethylene, 1-butene, 1-hexene, 4-methyl-1-pentene; modified polypropylenes blended with rubber based polymers; poly(1-butene), poly(4-methyl-1-pentene), modified polyolefins prepared by reacting the above-listed polyolefins with maleic anhydride; and ionomer resins. In the present invention, as polyolefins (A), it is preferable to use polypropylene based resins of polypropylene or propylene based copolymers, or polyethylene based resins of polyethylene or ethylene based copolymers. In particular, it is more preferable to use polypropylene based resins. When, out of these polyolefins (A), polyolefins containing halogen compounds from polymerization catalyst residues or existing as impurities in additives such as fillers and pigments at a level of 1 to 300 ppm, preferably 3 to 150 ppm, in terms of halogens are used, the effect of the present invention will be more remarkable.

EVOH (B) used in the present invention is ethylene-vinyl acetate copolymer with its vinyl acetate units saponified (hydrolyzed). EVOH having a relatively low ethylene content and a high degree of saponification (degree of hydrolysis) of vinyl acetate units tends to show poor compatibility with polyolefin. If the ethylene content in EVOH is excessive, the gas barrier property of the resin composition according to the present invention will be reduced. If the degree of saponification (degree of hydrolysis) of the vinyl acetate units in EVOH is low, the thermal stability of the EVOH itself will be poor. From these standpoints, the ethylene content of EVOH (B) according to the present invention is 20 to 65 mol%, or preferably 20 to 60 mol%, and more preferably 20 to 50 mol%. The degree of saponification of vinyl acetate units of EVOH (B) is preferably 96% or more, or more preferably 98% or more, and even more preferably 99% or more. EVOH having an ethylene content of 20 to 65 mol% and a degree of saponification of 99% or more is especially important as a subject matter to which the present invention applies because it can be used to obtain containers having excellent properties such as gas barrier property when laminated with polyolefin (A).

The EVOH (B) may be modified with other copolymerizable monomers to the extent that does not inhibit the effect of the present invention, usually in the range of not more than 5 mol%. Examples of the modifying copolymerizable monomer include α-olefins such as propylene, 1-butene, 1-hexene, and 4-methyl-1-pentene; esters such as acrylic acid esters and methacrylic acid esters; higher fatty acids such as maleic acid, fumaric acid, and itaconic acid, and vinyl esters thereof; alkyl vinyl ethers; N-(2-dimethylaminoethyl) methacrylamide or its quaternary compounds, N-vinylimidazole or its quaternary compounds, N-vinylpyrrolidone, N, N-butoxymethylacrylamide, vinyltrimethoxysilane, vinylmethyldimethoxysilane, vinyldimethylmethoxysilane, and the like.

It is desirable that the melt index (MI; measured at 190°C, under a load of 2160 g) of EVOH (B) is 0.1 g/10 minutes or more, or preferably 0.5 g/10 minutes or more, and 100 g/10 minutes or less, or more preferably 50 g/10 minutes or less, and most preferably 30 g/10 minutes or less. In this case, from the viewpoint of the dispersibility of EVOH (B), the ratio of MI (B) /MI (A) is preferably in the range of 0.1 to 100, and more preferably 0.3 to 50. Here, MI (B) is MI of EVOH (B) and MI (A) is MI of polyolefin (A) (measured at 190°C, under a load of 2160 g).

To realize the best effect of the present invention, it is important to keep the mass ratio (A : B) of the polyolefin (A) and the EVOH (B) in the resin composition according to the present invention in the range of 60 : 40 to 99.9 : 0.1. In the mass ratio, if EVOH (B) exists at a higher level than 60 : 40, the effect of preventing the aggregation of EVOH (B) at a micro-scale level cannot be fully realized. If polyolefin (A) exists at a higher level than 99.9 : 0.1, the effect of the present invention cannot be fully observed. From this viewpoint, it is more preferable to keep the mass ratio (A : B) of polyolefin (A) and EVOH (B) in the range of 65 : 35 to 99.7 : 0.3.

As for higher fatty acid metal salts (C) according to the present invention, metal salts of lauric acid, stearic acid, myristic acid and the like can be used. As for the metal salts, those of Group I, II, or III of the periodic table, for example, such as sodium salt, potassium salt, calcium salt, and magnesium salt, can be listed. Zinc salt of these fatty acids may also be used. Of these, the metal salts of Group II of the periodic table, such as calcium salt and magnesium salt, are preferable as they can produce the effect of the present invention when added in a small quantity.

If the amount of higher fatty acid metal salts (C) to be added is too small, the effect of the present invention cannot be realized. If an excessive amount of the salts is added, it may promote thermal degradation of EVOH (B) and cause foaming by decomposition gases, or coloration. For this reason, it is preferable that the amount of higher fatty acid metal salts (C) to be added is in the range of 0.0001 to 10 parts by mass per 100 parts by mass of the total of polyolefin (A) and EVOH (B), or more preferable in the range of 0.001 to 1 part by mass.

Conjugated polyene compounds (D) used in the present invention are compounds having so-called conjugating double bonds and have a structure in which carbon-carbon double bonds and carbon-carbon single bonds are connected alternately, with the number of carbon-carbon double bonds being 2 or more. A conjugated polyene compound (D) may be a conjugated diene having 2 carbon-carbon double bonds and 1 carbon-carbon single bond connected alternately, or a conjugated triene having 3 carbon-carbon double bonds and 2 carbon-carbon single bonds connected alternately. It may be a conjugated polyene compound having a greater number of carbon-carbon double bonds and carbon-carbon single bonds connected alternately. Polyenes having fewer than 7 carbon-carbon double bonds to conjugate are preferred as, if the number of carbon-carbon double bonds to conjugate is 8 or more, the conjugated polyene compound may color the molded articles by its own color. Also, the polyene may contain, in one molecule, a plurality of independent sets of conjugating double bonds each consisting of 2 or more carbon-carbon double bonds. For example, a compound such as wood oil that has 3 conjugated trienes in one molecule can be included in conjugated polyene compounds (D). Conjugated polyene compounds (D) may also contain, in addition to conjugating double bonds, other functional groups. These functional groups include carboxylic group and its salt, hydroxyl group, ester group, carbonyl group, ether group, amino group, imino group, amide group, cyano group, diazo group, nitro group, sulfonic group, sulfoxide group, sulfide group, thiol group, sulfonic acid group and its salt, phosphate group and its salt, phenyl group, halogen atom, double bond, and triple bond.

Specific examples of conjugated polyene compounds (D) include conjugated diene compounds having conjugation structures of 2 carbon-carbon double bonds such as: isoprene; 2, 3-dimethyl-1, 3-butadiene; 2, 3-diethyl-1, 3-butadiene; 2-t-butyl-1, 3-butadiene; 1, 3-pentadiene; 2, 3-dimethyl-1, 3-pentadiene; 2, 4-dimethyl-1, 3-pentadiene; 3, 4-dimethyl-1, 3-pentadiene; 3-ethyl-1, 3-pentadiene; 2-methyl-1, 3-pentadiene; 3-methyl-1, 3-pentadiene; 4-methyl-1, 3-pentadiene; 1, 3-hexadiene; 2, 4-hexadiene; 2, 5-dimethyl-2, 4-hexadiene; 1, 3-octadiene; 1, 3-cyclopentadiene; 1, 3-cyclohexadiene; 1-phenyl-1, 3-butadiene; 1, 4-diphenyl-1, 3-butadiene; 1-methoxy-1, 3-butadiene; 2-methoxy-1, 3-butadiene; 1-ethoxy-1, 3-butadiene; 2-ethoxy-1, 3-butadiene; 2-nitro-1, 3-butadiene; chloroprene; 1-chloro-1, 3-butadiene; 1-bromo-1, 3-butadiene; 2-bromo-1, 3-butadiene; fulvene; tropone; ocimene; phellandrene; myrcene; farnesene; cembrene; sorbic acid; sorbic acid ester; sorbic acid salt; and abietic acid; conjugated triene compounds having conjugation structures of 3 carbon-carbon double bonds such as: 1, 3, 5-hexatriene; 2, 4, 6-octatriene-1-carboxylic acid; eleostearic acid; wood oil; and cholecarciferol; and conjugated polyene compounds having conjugation structures of 4 or more carbon-carbon double bonds such as: cyclooctatetraene; 2, 4, 6, 8-decatetraene-1-carboxylic acid; retinol; and retinoic acid. These conjugated polyene compounds (D) may be used singularly or in combinations of 2 or more compounds.

The amount of conjugated polyene compounds (D) to be added is in the range of 0.000001 to 1 part by mass per 100 parts by mass of the total of polyolefin (A) and EVOH (B), or more preferably in the range of 0.00001 to 1 part by mass. If the added amount is less than 0.000001 part by mass per 100 parts by mass of the total of polyolefin (A) and EVOH (B), the effect of the present invention may not be satisfactory. If the added amount is greater than 1 part by mass per 100 parts by mass of the total of polyolefin (A) and EVOH (B), gelation of the obtained resin compositions may be promoted.

In addition to above-mentioned polyolefin (A), EVOH (B), higher fatty acid metal salts (C), and conjugated polyene compounds (D) that constitute the resin composition of the present invention, hydrotalcite compounds (E) may be further added. Addition of the hydrotalcite compounds (E) as a constituent of the resin composition of the present invention is preferred because it further improves the dispersibility of EVOH (B) in the resin compositions.

As the hydrotalcite compounds (E) employed in the present invention, hydrotalcite complex salts shown by the following formula can be listed.

M1ₓ₁M2ₓ₂Al_{y}(OH)_{2(x1+x2)+3y-2z}(A)_{z·}aH₂O

(where: M1 is one or more selected from Mg, Ca, Sr or Ba; M2 is one or more selected from Zn, Cd, Pb, or Sn; A is CO₃ or HPO₄; x1 y, z are positive numbers; x2 and a are either 0 or positive numbers; and x1>x2, x1+x2>y).

In the hydrotalcite compounds, M1 is preferably Mg or Ca, and M2 is preferably Zn or Cd. Examples of particularly favorable hydrotalcite compounds are listed below.

Mg₆Al₂(OH)₁₆CO_{3·}4H₂O

Mg₈Al₂(OH)₂₀CO₃·5H₂O

Mg₅Al₂(OH)₁₄CO₃·4H₂O

Mg₁₀Al₂(OH)₂₂(CO₃)₂·4H₂O

Mg₆Al₂(OH)₁₆HPO₄·4H₂O

Ca₆Al₂(OH)₁₆CO₃·4H₂O

Zn₆Al₆(OH)₁₆CO₃·4H₂O

Mg₃ZnAl₂(OH)₁₂CO₃·2.7H₂O

Mg₆Zn₂Al₂(OH)₂₀CO_{3·}1.6H₂O

When the hydrotalcite compound (E) is further added, the added amount is in the range of 0.0001 to 10 parts by mass per 100 parts by mass of the total of polyolefin (A) and EVOH (B), and more preferably in the range of 0.001 to 1 part by mass. If the added amount is less than 0.0001 part by mass per 100 parts by mass of the total of polyolefin (A) and EVOH (B), the effect of the present invention may not be satisfactory. If the added amount is more than 10 parts by mass per 100 parts by mass of the total of polyolefin (A) and EVOH (B), it may promote thermal degradation of EVOH in the obtained resin composition and also may cause foaming by decomposition gases, or coloration.

Moreover, in addition to above-mentioned polyolefin (A), EVOH (B), higher fatty acid metal salts (C), and conjugated polyene compounds (D) that constitute the resin composition of the present invention, S-EVOH (F) may be further added. Addition of S-EVOH (F) as a constituent of the resin composition of the present invention is preferred because it can further improve the dispersibility of EVOH (B) in the resin composition.

The S-EVOH (F) is a saponified ethylene-vinyl acetate copolymer having an ethylene content of 68 to 98 mol% and having a degree of saponification of vinyl acetate units of 20% or more. Unlike the usual type of EVOH used for food wrapping materials, it has high ethylene content and is capable of significantly improving compatibility between polyolefin (A) and EVOH (B). The ethylene content of S-EVOH (F) is preferably 70 mol% or more, and it is preferably 96 mol% or less, or more preferably 94 mol% or less. The degree of saponification of vinyl acetate units is preferably 30% or more, or more preferably 40% or more. The upper limit of the degree of saponification is not strictly defined. Materials with a degree of saponification of 99 mol% or more or substantially 100% can also be used. If the ethylene content is below 68 mol% or above 98 mol%, or if the degree of saponification of vinyl acetate units is less than 20%, the effect of the present invention will not be fully realized.

According to the specification of the present invention, the ethylene content of S-EVOH (F) should be higher than that of EVOH (B). The difference in the ethylene content between S-EVOH (F) and EVOH (B) is preferably at least 10 mol% or more, and more preferably 20 mol% or more from the standpoint of improving the compatibility between polyolefin (A) and EVOH (B).

MI of S-EVOH (F) (measured at 190°C, under a load of 2160 g) is preferably 0.1 g/10 minutes or more, more preferably 0.5 g/10 minutes or more, and even more preferably 1 g/10 minutes or more. At the same time, the MI of S-EVOH (F) is preferably 100 g/10 minutes or less, or more preferably 50 g/10 minutes or less, and even more preferably 30 g/10 minutes or less. S-EVOH (F) used in the present invention may be modified with an unsaturated carboxylic acid or its derivatives. These unsaturated carboxylic acids or derivatives include acrylic acid, methacrylic acid, maleic acid, fumaric acid, itaconic acid, and maleic acid; methyl or ethyl esters of these acids; and maleic anhydride, itaconic anhydride, and the like. These acid monomers may be used singularly or in combination.

When S-EVOH (F) exits as the constituent in the resin composition of the present invention, the preferable added amount is 0.3 part by mass or more per 100 parts by mass of the total of polyolefin (A) and EVOH (B), and more preferably, it is 0.5 part by mass or more. If the addition is less than 0.3 part by mass, the effect of S-EVOH (F) addition may not be fully realized. Although the upper limit of the addition is not clearly specified, excessive addition will not increase the dispersibility of EVOH above a certain limit. In a normal practice, addition of 30 parts by mass or less will be sufficient.

Although hydrotalcite compounds (E) and S-EVOH (F) may each be independently added to the resin composition of the present invention constituted by polyolefin (A), EVOH (B), higher fatty acid metal salts (C), and conjugated polyene compounds (D), if the both are combined and added, then it is possible to obtain an advanced aggregation preventive effect at a micro-scale level of EVOH (B).

Adding modified polyolefin resins modified with unsaturated carboxylic acids or derivatives thereof to the resin composition of the present invention is effective in suppressing the aggregation of EVOH (B) at a micro-scale level. Here, modified polyolefin resins are polyolefin resins modified with one or more of unsaturated carboxylic acids or derivatives thereof, selected from the following groups: unsaturated carboxylic acids such as acrylic acid, methacrylic acid, maleic acid, fumaric acid, crotonic acid, itaconic acid and citraconic acid, including their esters or anhydrides; and derivatives of unsaturated carboxylic acids such as methyl acrylate, methyl methacrylate, ethyl acrylate, propyl acrylate, butyl acrylate, butyl methacrylate, vinyl acetate, glycidyl acrylate, glycidyl methacrylate, acrylamide, methacrylamide, sodium acrylate, and sodium methacrylate. As polyolefin resins before modification, polyethylene, polypropylene, ethylene-vinyl acetate copolymer, and ethylene-acrylate ester copolymers can be preferably listed.

Further, adding lubricants to the resin composition of the present invention is effective in suppressing the aggregation of EVOH (B) at a micro-scale level. Examples of the lubricants include: higher fatty acid esters (methyl ester (such as lauric acid, myristic acid, palmitic acid, stearic acid, behenic acid, and oleic acid), isopropyl ester, butyl ester, and octyl ester, for example); higher fatty acid amides (saturated aliphatic amides such as stearic acid amide and behenamide, unsaturated fatty acid amides such as oleic acid amide and erucic acid amide, and bis-fatty acid amides such as ethylene bis stearic acid amide, ethylene bis oleic acid amide, ethylene bis erucic acid amide, and ethylene bis lauric acid amide); low molecular weight polyolefins (low molecular weight polyethylene or low molecular weight polypropylene having a number average molecular weight of about 500 to about 10000, for example, or an acid-modified product thereof); higher alcohols, and ethylene fluoride resin. In particular, the higher fatty acid esters and the higher fatty acid amides are preferably used, and the higher fatty acid amides are more preferably used. When these lubricants are added, one or more thereof are preferably added in the range of 0.00001 to 1 part by mass per 100 parts by mass of the total of polyolefin (A) and EVOH (B). A more preferably added amount of the lubricant is 0.00005 to 0.5 part by mass. When the added amount of the lubricants is less than 0.00001 part by mass per 100 parts by mass of the total of polyolefin (A) and EVOH (B), EVOH (B) aggregation may not be effectively prevented. On the other hand, when the added amount is more than 1 part by mass, the lubricants are separated at the time of melt-molding the resin composition, and as a result, various abnormalities may arise.

In addition, the addition of boron compounds such as boron acid is preferable in suppressing the aggregation of EVOH (B) at a micro-scale level. Examples of the boron compounds include: boron, barax or a derivative thereof, boron halides such as boron trifluoride or an amine coordination compound or ether coordination compound thereof, trialkyl or triaryl borons such as trimethyl boron and triphenyl boron, or an amine coordination compound or ether coordination compound thereof, organo-substituted compounds of borohydrides such as alkyl and aryl boron or halides thereof, and sodium borohydride. Specifically, the boron and the barax are preferably used. When these boron compounds are added, one or more thereof are preferably added in the range of 0.001 to 0.5 part by mass per 100 parts by mass of EVOH (B). A more preferable added amount of the boron compounds are 0.02 to 0.3 part by mass in terms of boron. When the added amount of the boron compounds is less than 0.001 part by mass in terms of boron per 100 parts by mass of EVOH (B), the effect of improving the suppression of the EVOH (B) aggregation may be insufficient. On the other hand, when the addition is more than 0.5 part by mass, the EVOH (B) aggregation may be worsened.

Further, publicly known additives capable of improving various properties such as thermal stability at the time of melt extrusion molding of EVOH may be preferably added within the reasonable extent that does not inhibit the effect of the present invention as these additives may be expected to reduce the deterioration of EVOH (B) which is a constituent of the resin composition of the present invention. These additives include organic acids such as acetic acid and lactic acid, inorganic acids such as hydrochloric acid and phosphoric acid, metal salts of these acids with metals of periodic table Groups I, II and III.

In the following, the method of obtaining the resin composition of the present invention by mixing the polyolefin (A), EVOH (B), higher fatty acid metal salts (C), and conjugated polyene compounds (D), and the method of molding the resin compositions, will be explained.

There are no particular restrictions with respect to methods for blending to obtain the resin composition according to the present invention. A method wherein polyolefin (A), EVOH (B), higher fatty acid metal salts (C), and conjugated polyene compounds (D) are dry-blended together and then melt-blended; and a method wherein higher fatty acid metal salts (C) and/or conjugated polyene compounds (D) are blended in advance in polyolefin (A) and/or EVOH (B), and the mixture is dry-blended with the remaining components and then melt-blended; can be listed as examples. A preferable method is the one wherein polyolefin (A), a mixture prepared by blending conjugated polyene compounds (D) with EVOH (B) in advance and a mixture prepared by blending higher fatty acid metal salts (C) in advance, are dry-blended and then melt-blended.

In particular, when the conjugated polyene compound (D) is blended with EVOH (B) in advance, satisfactory results can be obtained as to the effect of the present invention even when a reduced amount of conjugated polyene compound (D) is added. Methods of blending conjugated polyene compound (D) in EVOH (B) in advance are not specified. A method is listed as an example wherein EVOH (B) is dissolved in a good solvent of EVOH (B) such as water/methanol mixed solvent, and a conjugated polyene compound (D) is dissolved in this solution at a concentration level of 0.000001 to 10 parts by mass per 100 parts by mass of EVOH (B). The mixed solution is extruded into a poor solvent through a nozzle, etc. The deposit is precipitated, solidified, rinsed and dried to obtain EVOH (B) blended with a conjugated polyene compound (D).

There are no particular restrictions with respect to methods for blending higher fatty acid metal salts (C) with polyolefin (A) in advance. A method wherein higher fatty acid metal salts (C) are dry-blended with polyolefin (A), and a method wherein polyolefin (A) and higher fatty acid metal salts (C) are melt-blended and then pelletized, are listed as examples. Of these methods, the latter is more favorable to easy handling from the standpoint that higher fatty acid metal salts (C) are usually in a powder form.

There are no particular restrictions with respect to methods for blending when adding hydrotalcite compound (E) and S-EVOH (F). A mixture of polyolefin (A), EVOH (B), higher fatty acid metal salts (C), and conjugated polyene compounds (D) can be dry-blended with hydrotalcite compound (E) and/or S-EVOH (F) then melt-blended. If polyolefin (A) and higher fatty acid metal salts (C) are melt-blended and then pelletized in advance, at the time of melt-blending, hydrotalcite compound (E) and/or S-EVOH (F) can be blended at the same time to be included in the pellet, then this treatment is preferable from the standpoint of reducing the number of materials to be handled at the final step of melt-blending the resin composition of the present invention.

The resin composition of the present invention may further blend additives other than those described above to the extent that does not inhibit the effect of the present invention. These additives include antioxidants, ultraviolet absorbers, plasticizers, antistatic agents, coloring agents, fillers and other polymeric compounds. Specific examples of additives are shown below.

Antioxidants: 2, 5-di-t-butylhydroquinone, 2, 6-di-t-butyl-p-cresol, 4, 4'-thiobis-(6-t-butylphenol), 2, 2'-methylene-bis-(4-methyl-6-t-butylphenol), octadecyl-3-(3', 5'-di-t-butyl-4'-hydroxylphenyl) propionate, 4, 4'-thiobis-(6-t-butylphenol), and the like.

Ultraviolet absorbers: ethylene-2-cyano-3, 3'-diphenyl acrylate, 2-(2'-hydroxyl-5'-methylphenyl)benzotriazole, 2-(2'-hydroxyl-3'-t-butyl-5'-methylphenyl)-5-chlorobenzotriazo le, 2-hydroxyl-4-methoxybenzophenone, 2, 2'-dihydroxyl-4-methoxybenzophenone, 2-hydroxyl-4-octoxybenzophenone, and the like.

Plasticizers: dimethyl phthalate, diethyl phthalate, dioctyl phthalate, wax, liquid paraffin, phosphoric acid esters, and the like.

Antistatic agents: pentaerythrit monostearate, sorbitan monopalmitate, sulfated polyolefins, polyethylene oxide, carbowax, and the like.

Coloring agents: titanium oxide, carbon black, phthalocyanine, quinacrydone, indolin, azo pigments, colcothar, and the like.

Fillers: glass fiber, asbestos, balastonite, calcium silicate, and the like.

Among these additives, coloring agents and fillers in particular, may often contain impurities that promote aggregation of EVOH (B) that constitutes the resin composition of the present invention at a micro-scale level. For this reason, when these additives are blended in, the amount of higher fatty acid metal salts (C) and/or conjugated polyene compounds (D) to be blended may have to be increased as needed.

Many other polymeric compounds may also be blended in the resin composition of the present invention to the extent that does not inhibit the effect of the present invention.

As the mixing tools for each constituent to obtain the resin composition of the present invention, ribbon blenders, high-speed mixer-cokneaders, mixing rolls, extruders, intensive mixers, or the like, can be listed.

The resin composition of the present invention can be molded into desired molded articles such as films, sheets, tubes, bottles, cups, and the like through publicly known melt extrusion molding machines, compression molding machines, transfer molding machines, injection molding machines, blow molding machines, heat molding machines, rotary molding machines, dipping molding machines, and the like. The extrusion temperature for molding is generally in the range of 170 to 350°C, although it is suitably selected depending on the type of polyolefin (A) constituting the resin composition of the present invention, melt indices of polyolefin (A) and EVOH (B), composition ratio of polyolefin (A) and EVOH (B), or type of molding machine and the like.

When the resin composition of the present invention is used as a layer construction of a multilayered structure containing the layer of polyolefin and the layer of EVOH, the multilayered structure may has any layer construction with one or more layers positioned in arbitrary positions. Such layer constructions are expressed as in the following layer constructions, where c is the resin composition of the present invention, a is polyolefin, b is EVOH, and ad is adhesive resin. Here, the modified polyolefin resin, modified with unsaturated carboxylic acids or derivatives thereof can be preferably used as ad.
3 layers: a/c/b
4 layers: c/b/ad/a, a/c/ad/b
5 layers: c/ad/b/ad/c, a/c/b/ad/a, a/c/b/c/a
6 layers: a/c/ad/b/ad/a
7 layers: a/c/ad/b/ad/c/a

In these multilayered structures, the resin composition of the present invention can be replaced with melt-blended scraps of the multilayered structure. In addition to the multilayered structure, scraps of other polyolefin molding can be mixed and melt-blended. Therefore, in the case when an ad layer is used in such multilayered structures, the resin composition of the present invention will necessarily contain ad as a constituent.

As the multilayered structures of the layer construction contain EVOH having a high gas barrier property, these are useful as packaging materials for food products, medicinal products, and medical devices, and the like, which require high gas barrier properties.

As a method of multilayer formation, co-extrusion molding is a favorable method. In this method, a number of separate extruders corresponding to the number of types of resin layers are used, and resins melted in each extruder are simultaneously co-extruded to form a laminated layer structure. Other applicable methods are multilayer formation methods including extrusion coating and dry lamination, and the like. Further, molded articles having excellent mechanical properties and excellent gas barrier properties can be obtained by performing the stretching on the singular molded article of the resin composition of the present invention, or the multilayered structures containing the resin composition of the present invention by means of monoaxial stretching, biaxial stretching, or blow stretching.

Molded articles obtained from the resin composition of the present invention have neat appearances and have excellent mechanical properties and excellent gas barrier properties, as EVOH in the resin composition of the present invention is uniformly dispersed with its aggregation at a micro-scale level suppressed. Thus, these articles are of great industrial value.

### [Examples]

In the following, the present invention will be explained in greater detail through examples. In the following manufacturing examples, examples, and comparative examples, "part" means "part by mass" unless otherwise specified.

### [Method of quantitative determination of conjugated polyene compound (D) blended in EVOH]

The amount of conjugated polyene compound (D) in EVOH was quantitatively determined in the following manner. In this method, EVOH containing conjugated polyene compound (D) was pulverized and sifted through a 100-mesh sieve to eliminate coarse particles. A 10 g portion of this powder was submitted to Soxhlet extraction for 48 hours with 100 ml of chloroform. The amount of polyene compound in the extraction liquid was determined by high performance liquid chromatography using calibration curves prepared with the reference standard of each polyene compound.

### Manufacturing Example 1

(1) 2000 parts of EVOH having an ethylene content of 32 mol%, having a degree of saponification of 99.8 mol%, and limiting viscosity [η]ₚₕ of 0.092 L/g as measured at 30°C using a liquid mixture of water/phenol=15/85 (mass ratio) as a solvent, were added to 18000 parts of a mixed solvent of water/methanol = 40/60 (mass ratio) and completely dissolved by stirring for 6 hours at 60°C. To this solution, 2 parts of sorbic acid were added as a conjugated polyene compound (D) and completely dissolved by stirring for 1 additional hour at 60° C to obtain EVOH solution containing sorbic acid. This EVOH solution was continuously extruded into a coagulation bath of water/methanol = 95/5 (mass ratio) at 0°C through a nozzle of 4 mm in diameter to coagulate EVOH in a stranded shape. This strand was then introduced into a pelletizer to obtain porous EVOH chips.
(2) The porous EVOH chips obtained in (1) above were consecutively rinsed with 2000 parts of 0.1 mass% aqueous acetic acid solution and then with 2000 parts of ion exchanged water at 20°C followed by immersion for 4 hours in 2000 parts of 0.092% aqueous boric acid solution at 20°C per 100 parts of the chips. EVOH chips were dewatered and isolated from the solution and dried for 4 hours in a hot-air drier at 80°C, followed by drying for 16 hours at 100°C to obtain EVOH chips. The obtained EVOH chips contained 0.01 part of sorbic acid and 0.019 part of boric acid per 100 parts of EVOH in terms of boron. The melt index of this EVOH was 1.6 g/10 minutes (ASTM-D1238, measured at 190°C, under a load of 2160 g).
(3) To 100 parts of EVOH chips obtained in the (2) above, 0.02 part of ethylene stearic bis amide was added as a lubricant, followed by shaking and mixing until the lubricant was dispersed evenly in the EVOH chips to obtain EVOH (B1).

### Manufacturing Example 2

EVOH (B2) containing 0.05 part of β-myrcene per 100 parts of EVOH was obtained in the same manner as in Manufacturing Example 1 except for the use of 2 parts of β-myrcene instead of the 2 parts of sorbic acid in Manufacturing Example 1(1) as the conjugated polyene compound (D).

### Manufacturing Example 3

EVOH (B3) was obtained in the same manner as in Manufacturing Example 1 except that ethylene stearic bis amide was not added (i.e., the step in the manufacturing example 1(3) was not conducted) in Manufacturing Example 1(3).

### Manufacturing Example 4

EVOH (B4) was obtained in the same manner as in Manufacturing Example 1 except that sorbic acid was not added to EVOH water/methanol solution in Manufacturing Example 1(1).

### Manufacturing Example 5

EVOH (B5) containing 0.002 part of sorbic acid per 100 parts of EVOH was obtained in the same manner as in Manufacturing Example 1 except for changing the amount of sorbic acid added to EVOH water/methanol solution from 2 parts to 0.4 part in Manufacturing Example 1(1).

### Manufacturing Example 6

EVOH (B6) containing 0.0032 part of sorbic acid per 100 parts of EVOH was obtained in the same manner as in Manufacturing Example 1 except for changing the amount of sorbic acid added to EVOH water/methanol solution from 2 parts to 0.65 part in Manufacturing Example 1(1).

### Manufacturing Example 7

(1) Porous EVOH chips were obtained in the same manner as in Manufacturing Example 1 except that EVOH having an ethylene content of 32 mol% and a degree of saponification of 99. 8 mol%, and a limiting viscosity [n]ₚₕ of 0.112 L/g as measured at 30°C using a liquid mixture of water/phenol=15/85 (mass ratio) as a solvent was used.
(2) The porous EVOH chips obtained in (1) above were consecutively rinsed with 0.1 mass% aqueous acetic solution and ion exchanged water in the same manner as in Manufacturing Example 1(2), and then were dried in the same manner as in Manufacturing Example 1(2) without immersing in aqueous boric acid solution. In addition, by adding the lubricants in the same manner as in the Manufacturing Example 1 (3), EVOH (B7) was obtained. The melt index of this EVOH (B7) (ASTM-D1238, measured at 190°C, under a load of 2160 g) was 1.5 g/10 minutes.

### Example 1

(1) As polyolefin (A), polypropylene including titanium oxide which is a white pigment {(titanium oxide content: 0.3 part per 100 parts of polypropylene: melt index 5.4 g/10 minutes (ASTM-D1238, measured at 230°C), hereinafter "PP") was used. Then, 1.11 parts of calcium stearate which is a higher fatty acid metal salt (C) were dry-blended with the 100 parts of this PP, and the resulting mixture was pelletized after blending at an extrusion temperature of 200°C by using in a twin screw co-rotating extruder having a diameter of 30 mm (TEX-30N, manufactured by Japan Steel Works, Ltd.) to obtain a PP master batch containing calcium stearate (hereinafter, simply "PP master batch (a)").
(2) 81 parts of the above-described PP, 9 parts of PP master batch (a), and 10 parts of EVOH (B1) were dry-blended to obtain a mixture. The composition of this mixture was 90 parts of PP which is a polyolefin (A), 10 parts of EVOH (B), 0.1 part of calcium stearate which is a higher fatty acid metal salt (C), and 0.001 part of sorbic acid which is a conjugated polyene compound (D). Using a single screw extruder having a diameter of 20 mm (Laboplastmill - manufactured by Toyo Seiki, Co.) and a 300 mm wide T-die extruder, a single layer film, 40 µm thick, was manufactured from this mixture. The film manufacturing temperature was 190 to 230°C at the extruder, and 220°C at the die. The screw rotation was 40 rpm, and the volume of discharge was 0.95 kg/hour.

About 5 m of the film was sampled 1 hour after the mixture was put in the extruder hopper. On the center part of the sampled film, a square, 10 cm by 10 cm, was drawn and the number of EVOH aggregates, approximately 200 µm or more in diameter (the maximum diameter), in this square was counted using the backlight of a table-top fluorescent lamp. This counting was done at an interval of 50 cm, with a total of 10 positions along the length of the sampled film. The average of EVOH aggregate count per 100 cm² was calculated to be 0.8 piece.

### Example 2

The dry-blended mixture was obtained in the same manner as in Example 1(2) except that 10 parts of EVOH (B2) containing β-myrcene were used instead of 10 parts of EVOH (B1) containing sorbic acid in Example 1(2). A single layer film was manufactured from this mixture and then the EVOH aggregates in the obtained film were counted. The result was 0.8 piece per 100 cm²

### Example 3

The dry-blended mixture was obtained in the same manner as in Example 1(2) except that 10 parts of EVOH (B3) not containing the lubricant were used instead of 10 parts of EVOH (B1) in Example 1(2). A single layer film was manufactured from this mixture and then the EVOH aggregates in the obtained film were counted. The result was 3.0 pieces per 100 cm².

### Comparative example 1

In the process of Example 1(2), 90 parts of PP, and 10 parts of EVOH (B4) not containing conjugated polyene compounds (D) were dry-blended to obtain a mixture. A single layer film was manufactured from this mixture and then the EVOH aggregates in the obtained film were counted in the same manner as in Example 1(2). The result was 100 pieces or more per 100 cm².

### Comparative example 2

In the process of Example 1(2), 81 parts of PP, 9 parts of PP master batch (a), and 10 parts of EVOH (B4) not containing conjugated polyene compounds (D) were dry-blended to obtain a mixture. A single layer film was manufactured from this mixture and then the EVOH aggregates in the obtained film were counted in the same manner as in Example 1(2). The result was 12 pieces per 100 cm²

### Comparative example 3

In the process of Example 1(2), 90 parts of PP, and 10 parts of EVOH (B1) containing conjugated polyene compounds (D) were dry-blended to obtain a mixture. A single layer film was manufactured from this mixture and then the EVOH aggregates in the obtained film were counted in the same manner as in Example 1(2). The result was 20 pieces per 100 cm².

### Comparative example 4

In the process of Example 1(2), 41 parts of PP, 9 parts of PP master batch (a), and 50 parts of EVOH (B5) were dry-blended to obtain a mixture. The composition of this mixture was 50 parts of PP which is a polyolefin (A), 50 parts of EVOH (B), 0.1 part of calcium stearate which is a higher fatty acid metal salt (C), and 0.001 part of sorbic acid which is a conjugated polyene compound (D). A single layer film was manufactured from this mixture and then the EVOH aggregates in the obtained film were counted in the same manner as in Example 1(2). The result was 35 pieces per 100 cm².

### Example 4

In the process of Example 1(2), 61 parts of PP, 9 parts of PP master batch (a), and 30 parts of EVOH (B6) were dry-blended to obtain a mixture. The composition of this mixture was 70 parts of PP which is a polyolefin (A), 30 parts of EVOH (B), 0.1 part of calcium stearate which is a higher fatty acid metal salt (C), and 0.00096 part of sorbic acid which is a conjugated polyene compound (D). A single layer film was manufactured from this mixture and then the EVOH aggregates in the obtained film were counted in the same manner as in Example 1(2). The result was 1.9 pieces per 100 cm².

### Example 5

The dry-blended mixture was obtained in the same manner as in Example 1(2) except that 10 parts of EVOH (B7) not containing the boric acid were used instead of 10 parts of EVOH (B1) in Example 1(2). A single layer film was manufactured from this mixture and then the EVOH aggregates in the obtained film were counted. The result was 1.0 piece per 100 cm².

### Example 6

(1) A master batch (hereinafter, "PP master batch (b)") was obtained in the same manner as in Example 1(1) except that 1.11 parts of magnesium stearate were used instead of 1.11 parts of calcium stearate in Example 1(1).
(2) The dry-blended mixture was obtained in the same manner as in Example 1(2) except that 9 parts of PP master batch (b) were used instead of 9 parts of PP master batch (a) in Example 1(2). A single layer film was manufactured from this mixture and then the EVOH aggregates in the obtained film were counted. The result was 0.7 piece per 100 cm².

### Comparative Example 5

In the process of Example 1(2), 90 parts of PP, 10 parts of EVOH (B1), and 20 parts of calcium stearate powder were dry-blended to obtain a mixture. It was attempted to manufacture a single layer film by using this mixture in the same manner as in Example 1(2). However, calcium stearate in liquid form, which had separated from the resins, spouted out of a T-die lip part and many holes were formed on the film surface, and therefore counting of EVOH aggregates was not possible.

### Example 7

(1) A master batch (hereinafter, "PP master batch (c)") was obtained in the same manner as in Example 1 (1) except that 100 parts of natural polypropylene not containing titanium oxide were used instead of 100 parts of PP in Example 1(1).
(2) The dry-blended mixture was obtained in the same manner as in Example 1(2) except that 9 parts of PP master batch (c) were used instead of 9 parts of PP master batch (a) in Example 1(2). A single layer film was manufactured from this mixture and then the EVOH aggregates in the obtained film were counted. The result was 0.4 piece per 100 cm².

### Example 8

(1) In the process of Example 1(1), 1.11 parts of Mg₆Al₂(OH)₁₆CO₃·4H₂O which is a hydrotalcite compound (E) was further dry-blended. Thus, a master batch (hereinafter, "PP master batch (d)") was obtained in the same manner as in Example 1(1).
(2) In the process of Example 1(2), the dry-blended mixture was obtained in the same manner as in Example 1(2) except that 9 parts of PP master batch (d) were used instead of 9 parts of PP master batch (a) in Example 1(2). A single layer film was manufactured from this mixture and then the EVOH aggregates in the obtained film were counted. The result was 0.5 piece per 100 cm².

### Example 9

In the process of Example 1(2), 81 parts of PP, 9 parts of PP master batch (a), 10 parts of EVOH (1), and 2 parts of S-EVOH (F) {ethylene content ratio of 74 mol%, degree of saponification of vinyl acetate component of 82%, and melt index (190°C, 2160 g) of 4.9 g/10 minutes} are added by dry-blending. Thus, a mixture was obtained. A single layer film was manufactured from this mixture and then the EVOH aggregates in the obtained film were counted in the same manner as in Example 1(2). The result was 0.4 piece per 100 cm².

### Example 10

9 parts of PP master batch (d) were used instead of 9 parts of PP master batch (a) in Example 1(2)and 2 parts of S-EVOH (F) used in Example 9 were further added by dry-blending. Thus, a mixture was obtained. A single layer film was manufactured by using this mixture and then the EVOH aggregates in the obtained film were counted in the same manner as in Example 1(2). No EVOH aggregates were confirmed.

### Comparative Example 6

In the process of Example 1(2), 81 parts of PP, 9 parts of PP master batch (a), 10 parts of EVOH (B4) not containing a conjugated polyene compound (D), and 5 parts of sorbic acid powder which is a conjugated polyene compound (D) were added and dry-blended. Thus, a mixture was obtained. A single layer film was manufactured from this mixture and then the EVOH aggregates in the obtained film were counted in the same manner as in Example 1(2). The result was 100 pieces or more per 100 cm²

### Example 11

In the process of Example 1(2), 81 parts of PP, 9 parts of PP master batch (a), 10 parts of EVOH (B4) not containing a conjugated polyene compound (D), and 0.001 part of sorbic acid powder which is a conjugated polyene compound (D) were added and dry-blended. Thus, a mixture was obtained. A single layer film was manufactured from this mixture and then the EVOH aggregates in the obtained film were counted in the same manner as in Example 1(2). The result was 1.4 pieces per 100 cm².

### Example 12

A single layer film was manufactured and then the EVOH aggregates in the obtained film were counted in the same manner as in Example 11 except that the addition of sorbic acid was increased to 0.01 part in Example 11. The result was 0.7 piece per 100 cm².

### Comparative Example 7

In the process of Example 1(2), 81 parts of PP, 9 parts of PP master batch (d) containing hydrotalsite compound (E), and 10 parts of EVOH (B4) not containing a conjugated polyene compound (D) were dry-blended to obtain a mixture. A single layer film was manufactured from this mixture and then the EVOH aggregates in the obtained film were counted in the same manner as in Example 1(2). The result was 7.1 pieces per 100 cm².

### Example 13

Manufacturing testing of co-extrusion film including the resin composition layers of the present invention was performed by using the following four types of 7-layer co-extrusion cast film manufacturing equipment.
Extruder (1) : single screw, screw diameter 65 mm, L/D=22, for outer layer polyolefin
Extruder (2) : single screw, screw diameter 40 mm, L/D=26, for resin composition of this present invention
Extruder (3): single screw, screw diameter 40 mm, L/D=22, for adhesive resins
Extruder (4): single screw, screw diameter 40 mm, L/D=26, for EVOH Co-extrusion film manufacturing was performed by feeding PP into Extruder (1), a mixture of 81 parts of PP, 9 parts of PP master batch (a), and 10 parts of EVOH (B1) prepared by dry-blending in the same manner as in Example 1(2), into Extruder (2), a modified polypropylene adhesive resin modified with maleic acid anhydride (ADMER QF-500 (tradename), manufactured by Mitsui Chemical, Inc.) into Extruder (3), and EVOH (B4) into Extruder (4), respectively. The extrusion temperature was 200 to 240°C for Extruder (1), 160 to 220°C for Extruder (2), 160 to 230°C for Extruder (3), 170 to 210°C for Extruder (4), and 220°C for feed block and die. The objective for the manufactured multilayer film composition and the thickness was: PP/resin composition of the present invention/adhesive resin/EVOH/adhesive resin/resin composition of the present invention/PP = 30/15/2.5/5/2.5/15/30 µm, a total of 100 µm in thickness made of four types and seven layers.

According to the observation of the appearance of the sheet sampled after 2 hours following the initiation of the film manufacturing, it was concluded that the obtained multilayer film does not present any problem for practical application, with hardly any deteriorated appearance attributable to EVOH aggregation and flow mark due to flow anomalies.

### Comparative Example 8

A multilayer film was obtained in the same manner as in Example 13 except that the mixture used for feeding the Extruder (2) in Example 13 was replaced by the mixture used in Comparative Example 1 prepared by dry-blending 90 parts of PP and 10 parts of EVOH (B4). The appearance of the obtained multilayer film clearly showed a flow mark due to EVOH aggregates and flow anomalies at a level unsuitable for practical application.

### Comparative Example 9

A multilayer film was obtained in the same manner as in Example 13 except that the mixture used for feeding the Extruder (2) in Example 13 was replaced by the mixture used in Comparative Example 2 prepared by dry-blending 81 parts of PP, 9 parts of PP master batch (a), and 10 parts of EVOH (B4). Although the appearance of the obtained multilayer film was better than that of the multilayer film of Comparative Example 8, it still showed some flow mark due to EVOH aggregates and flow anomalies at a level unsuitable for practical application.

### Comparative Example 10

A multilayer film was obtained in the same manner as in Example 13 except that the mixture used for feeding the Extruder (2) in Example 13 was replaced by the mixture used in Comparative Example 3 prepared by dry-blending 90 parts of PP and 10 parts of EVOH (B1). The appearance of the obtained multilayer film was similar to that obtained in Comparative Example 9, and showed some flow mark due to EVOH aggregates and flow anomalies at a level unsuitable for practical application.

### Comparative Example 11

A multilayer film was obtained in the same manner as in Example 13 except that the mixture used for feeding the Extruder (2) in Example 13 was replaced by the mixture used in Comparative Example 7 prepared by dry-blending 81 parts of PP, 9 parts of PP master batch (d) containing hydrotalcite compound (E), and 10 parts of EVOH (B4) not containing conjugated polyene compounds (D). The appearance of the obtained multilayer film was similar to that obtained in Comparative Example 9, and showed some flow mark due to EVOH aggregates and flow anomalies at a level unsuitable for practical application.

### Example 14

A multilayer film was obtained in the same manner as in Example 13 except that the mixture used for feeding the Extruder (2) in Example 13 was replaced by the mixture used in Example 10 prepared by dry-blending 81 parts of PP, 9 parts of PP master batch (d), 10 parts of EVOH (B1), and 2 parts of S-EVOH (F). The appearance of the obtained multilayer film was even better than that of Example 13, with no flow mark due to EVOH aggregates and flow anomalies.

The results of each Example and Comparative Example are summarized in Table 1 and Table 2.

[Table 1]

**Table 1 Results of manufacturing single layer film**

| | Polyolefin (A) | | EVOH (B) | Higher fatty acid metal salt (C) | | Conjugate polyene compound (D) | | Hydrotalcite (E) | S-EVOH (F) | EVOH aggregate count (per 100 cm²) |
|---|---|---|---|---|---|---|---|---|---|---|
| | Type | Amount | Type Amount | Type | Amount¹⁾ | Type | Amount¹⁾ | Amount¹⁾ | Amount¹⁾ | (per/100cm²) |
| EX. 1 | PP+TiO₂ 0.3phr | 90 | EVOH(B1) 10 | Calcium stearate | 0.1 | sorbic acid | 0.001 | | | 0.8 |
| EX. 2 | PP+TiO₂ 0.3phr | 90 | EVOH(B2) 10 | Calcium stearate | 0.1 | β-myrcene | 0.005 | | | 0.8 |
| EX. 3 | PP+TiO₂ 0.3phr | 90 | EVOH(B3) 10 | Calcium stearate | 0.1 | sorbic acid | 0.001 | | | 3.0 |
| EX. 4 | PP+TiO₂ 0.3phr | 70 | EVOH(B6) 30 | Calcium stearate | 0.1 | sorbic acid | 0.00096 | | | 1.9 |
| EX. 5 | PP+TiO₂ 0.3phr | 90 | EVOH(B7) 10 | Calcium stearate | 0.1 | sorbic acid | 0.001 | | | 1.0 |
| EX. 6 | PP+TiO₂ 0.3phr | 90 | EVOH(B1) 10 | Magnesium stearate | 0.1 | sorbic acid | 0.001 | | | 0.7 |
| EX. 7 | PP (natural) | 90 | EVOH(B1) 10 | Calcium stearate | 0.1 | sorbic acid | 0.001 | | | 0.4 |
| EX. 8 | PP+TiO₂ 0.3phr | 90 | EVOH(B1) 10 | Calcium stearate | 0.1 | sorbic acid | 0.001 | 0.1 | | 0.5 |
| EX. 9 | PP+TiO₂ 0.3phr | 90 | EVOH(B1) 10 | Calcium stearate | 0.1 | sorbic acid | 0.001 | | 2 | 0.4 |
| EX. 10 | PP+TiO₂ 0.3phr | 90 | EVOH(B1) 10 | Calcium stearate | 0.1 | sorbic acid | 0.001 | 0.1 | 2 | 0 |
| EX. 11 | PP+TiO₂ 0.3phr | 90 | EVOH(B4) 10 | Calcium stearate | 0.1 | sorbic acid | 0.001 | | | 1.4²⁾ |
| EX. 12 | PP+TiO₂ 0.3phr | 90 | EVOH(B4) 10 | Calcium stearate | 0.1 | sorbic acid | 0.01 | | | 0.7²⁾ |
| Comparative EX. 1 | PP+TiO₂ 0.3phr | 90 | EVOH(B4) 10 | - | - | - | - | | | >100 |
| Comparative EX. 2 | PP+TiO₂ 0.3phr | 90 | EVOH(B4) 10 | Calcium stearate | 0.1 | - | - | | | 12 |
| Comparative EX. 3 | PP+TiO₂ 0.3phr | 90 | EVOH(B1) 10 | - | - | sorbic acid | 0.001 | | | 20 |
| Comparative EX. 4 | PP+TiO₂ 0.3phr | 50 | EVOH(B5) 50 | Calcium stearate | 0.1 | sorbic acid | 0.001 | | | 35 |
| Comparative EX. 5 | PP+TiO₂ 0.3phr | 90 | EVOH(B1) 10 | Calcium stearate | 20 | sorbic acid | 0.001 | | | -³⁾ |
| Comparative EX. 6 | PP+TiO₂ 0.3phr | 90 | EVOH(B4) 10 | Calcium stearate | 0.1 | sorbic acid | 5 | | | >100 |
| Comparative EX. 7 | PP+TiO₂ 0.3phr | 90 | EVOH(B4) 10 | Calcium stearate | 0.1 | - | - | 0.1 | | 7.1 |

| | | | | | | | | | | |
|---|---|---|---|---|---|---|---|---|---|---|
| Hydrotalcite : Mg₆Al₂(OH)₁₆CO₃·4H₂O 1) Mass parts per 100 mass parts of the total of the polyolefin (A) and the EVOH (B) 2) Sorbic acid is subsequently dry-blended 3) Film manufacture was impossible due to foaming | | | | | | | | | | |

**[Table 2]**

| Table 2 Results of manufacturing multilayer film | | | | | | | | | | | |
|---|---|---|---|---|---|---|---|---|---|---|---|
| | Polyolefin (A) | | EVOH (B) | | Higher fatty acid metal salt (C) | | Conjugated polyene compound (D) | | Hydrotalcite (E) | S-EVOH (F) | Film surface appearance ²⁾ |
| | Type | Amount | Type | Amount | Type | Amount¹⁾ | Type | Amount¹⁾ | Amount¹⁾ | Amount¹⁾ | |
| EX. 13 | PP+TiO₂ 0.3phr | 90 | EVOH(B1) | 10 | Calcium stearate | 0.1 | sorbic acid | 0.001 | | | B |
| Ex. 14 | PP+TiO₂ 0.3phr | 90 | EVOH(B1) | 10 | Calcium stearate | 0.1 | sorbic acid | 0.001 | 0.1 | 2 | A |
| Comparative EX. 8 | PP+TiO₂ 0.3phr | 90 | EVOH(B4) | 10 | - | - | - | - | | | D |
| Comparative EX. 9 | PP+TiO₂ 0.3phr | 90 | EVOH(B4) | 10 | Calcium stearate | 0.1 | - | - | | | C |
| Comparative EX. 10 | PP+TiO₂ 0.3phr | 90 | EVOH(B1) | 10 | - | - | sorbic acid | 0.001 | | | C |
| Comparative EX. 11 | PP+TiO₂ 0.3phr | 90 | EVOH(B4) | 10 | Calcium stearate | 0.1 | - | - | 0.1 | | C |

| | | | | | | | | | | | |
|---|---|---|---|---|---|---|---|---|---|---|---|
| Hydrotalcite : MgAl₂(OH)₁₆CO₃·4H₂O 1) Mass parts per 100 mass parts of the total of the polyolefin (A) and the EVOH (B) 2) A: No flow marks were found. B: Flow marks were rarely found, hence practically acceptable. C: Some flow marks were found, hence practically problematic. D: Flow marks were clearly found, hence practically problematic. | | | | | | | | | | | |

The present invention relates to a resin composition, wherein higher fatty acid metal salt (C) having 8 to 22 carbon atoms and a conjugated polyene compound (D) having a boiling point of 20°C or higher are blended with polyolefin (A) and EVOH (B), the mass ratio (A : B) of polyolefin (A) and EVOH (B) is 60 : 40 to 99.9 : 0. 1, the amount of higher fatty acid metal salts (C) is in the range of 0.0001 to 10 parts by mass per 100 parts by mass of the total of polyolefin (A) and EVOH (B), the amount of conjugated polyene compound (D) is in the range of 0.000001 to 1 part by mass per 100 parts by mass of EVOH (B). By using this composition, a poor appearance (flow mark) caused by the EVOH aggregation and flow anomalies attributable to the aggregation can be prevented, and molded articles having an excellent appearance can be obtained.

## Claims

1. A resin composition, comprising
a polyolefin (A) selected from the group consisting of polyethylene, ethylene based copolymers prepared by copolymerization of ethylene and α-olefins or acrylic esters, polypropylene, propylene based copolymers prepared by copolymerization of propylene and α-olefins, modified polypropylenes blended with rubber based polymers, poly(1-butene), poly(4-methyl-1-pentene), modified polyolefins prepared by reacting the above-listed polyolefins with maleic anhydride, and ionomer resins;
a saponified ethylene-vinyl acetate copolymer (B) having an ethylene content of 20 to 65 mol% and having a degree of saponification of vinyl acetate units of 96% or more;
a higher fatty acid metal salt (C) having 8 to 22 carbon atoms; and a conjugated polyene compound (D) having a boiling point of 20°C or higher;
wherein
the mass ratio (A : B) of the polyolefin (A) and the saponified ethylene-vinyl acetate copolymer (B) is 60 : 40 to 99.9 : 0.1,
the amount of the higher fatty acid metal salts (C) is in the range of 0.0001 to 10 parts by mass per 100 parts by mass of the total of the polyolefin (A) and the saponified ethylene-vinyl acetate copolymer (B), and
the amount of conjugated polyene compound (D) is in the range of 0.000001 to 1 part by mass per 100 parts by mass of the total of the polyolefin (A) and the saponified ethylene-vinyl acetate copolymer (B).

2. The resin composition according to claim 1, further comprising a hydrotalcite compound (E) in the range of 0.0001 to 10 parts by mass per 100 parts by mass of the total of the polyolefin (A) and the saponified ethylene-vinyl acetate copolymer (B) having an ethylene content of 20 to 65 mol% and having a degree of saponification of the vinyl acetate units of 96% or more.

3. The resin composition according to claim 1 or claim 2, further comprising 0.3 part by mass or more of a saponified ethylene-vinyl acetate copolymer (F) having an ethylene content of 68 to 98 mol% and having a degree of saponification of the vinyl acetate units of 20% or more, per 100 parts by mass of the total of the polyolefin (A) and the saponified ethylene-vinyl acetate copolymer (B) having an ethylene content of 20 to 65 mol% and having a degree of saponification of the vinyl acetate units of 96% or more.

4. A multilayered structure having at least two layers comprising a layer made of the resin composition according to any one of claims 1 to 3 and a layer made of a saponified ethylene-vinyl acetate copolymer having an ethylene content of 20 to 65 mol% and having a degree of saponification of the vinyl acetate units of 96% or more.

## Patentansprüche

1. Harzzusammensetzung, umfassend
ein Polyolefin (A), ausgewählt aus der Gruppe, bestehend aus Polyethylen, Ethylen-basierten Copolymeren, hergestellt durch das Copolymerisieren von Ethylen und α-Olefinen oder Acrylsäureestern, Polypropylen, Propylenbasierten Copolymeren, hergestellt durch das Copolymerisieren von Propylen und α-Olefinen, modifizierten Polypropylenen gemischt mit Kautschuk-basierten Polymeren, Poly(1-buten), Poly(4-methyl-1-penten), modifizierten Polyolefinen, hergestellt durch das Umsetzen der vorstehend genannten Polyolefine mit Maleinsäureanhydrid, und lonomerharzen;
ein verseiftes Ethylen-Vinylacetat-Copolymer (B) mit einem Ethylenanteil von 20 bis 65 Mol% und mit einem Verseifungsgrad der Vinylacetateinheiten von 96% oder mehr;
ein Metallsalz einer höheren Fettsäure (C) mit 8 bis 22 Kohlenstoffatomen; und eine konjugierte Polyenverbindung (D) mit einem Siedepunkt von 20°C oder höher;
wobei
das Masseverhältnis (A : B) des Polyolefins (A) und des verseiften Ethylen-Vinylacetat-Copolymers (B) 60 : 40 bis 99,9 : 0,1 beträgt,
die Menge der Metallsalze der höheren Fettsäure (C) in dem Bereich von 0,0001 bis 10 Masseteile pro 100 Masseteile der Gesamtheit des Polyolefins (A) und des verseiften Ethylen-Vinylacetat-Copolymers (B) liegt, und
die Menge der konjugierten Polyenverbindung (D) in dem Bereich von 0,000001 bis 1 Masseteile pro 100 Masseteile der Gesamtheit des Polyolefins (A) und des verseiften Ethylen-Vinylacetat-Copolymers (B) liegt.

2. Harzzusammensetzung nach Anspruch 1, weiter umfassend eine Hydrotalcitverbindung (E) in dem Bereich von 0,0001 bis 10 Masseteilen pro 100 Masseteile der Gesamtheit des Polyolefins (A) und des verseiften Ethylen-Vinylacetat-Copolymers (B) mit einem Ethylenanteil von 20 bis 65 Mol% und mit einem Verseifungsgrad der Vinylacetateinheiten von 96% oder mehr.

3. Harzzusammensetzung nach Anspruch 1 oder Anspruch 2, weiter umfassend 0,3 Masseteile oder mehr eines verseiften Ethylen-Vinylacetat-Copolymers- (F) mit einem Ethylenanteil von 68 bis 98 Mol% und mit einem Verseifungsgrad der Vinylacetateinheiten von 20% oder mehr pro 100 Masseteile der Gesamtheit des Polyolefins (A) und des verseiften Ethylen-Vinylacetat-Copolymers (B) mit einem Ethylenanteil von 20 bis 65 Mol% und mit einem Verseifungsgrad der Vinylacetateinheiten von 96% oder mehr.

4. Mehrschichtige Struktur mit mindestens zwei Schichten, umfassend eine Schicht, die aus der Harzzusammensetzung nach einem der Ansprüche 1 bis 3 hergestellt ist, und eine Schicht, die aus einem verseiften Ethylen-Vinylacetat-Copolymer mit einem Ethylenanteil von 20 bis 65 Mol% und mit einem Verseifungsgrad der Vinylacetateinheiten von 96% oder mehr hergestellt ist.

## Revendications

1. Composition de résine, comprenant
une polyoléfine (A) choisie parmi le groupe consistant en du polyéthylène, des copolymères à base d'éthylène préparés par copolymérisation d'éthylène et d'α-oléfines ou d'esters acryliques, du polypropylène, des copolymères à base de propylène préparés par copolymérisation de propylène et d'α-oléfines, des polypropylènes modifiés mélangés à des polymères à base de caoutchouc, du poly(1-butène), du poly(4-méthyl-1-pentène), des polyoléfines modifiées préparées par réaction des polyoléfines ci-dessus avec l'anhydride maléique, et des résines ionomères ;
un copolymère éthylène-acétate de vinyle saponifié (B) ayant une teneur en éthylène de 20 à 65% en moles et ayant un degré de saponification des unités acétate de vinyle de 96% ou plus ;
un sel métallique d'acide gras supérieur (C) ayant 8 à 22 atomes de carbone, et
un composé polyène conjugué (D) ayant un point d'ébullition de 20°C ou plus, où
le rapport massique (A:B) de la polyoléfine (A) et le copolymère éthylène-acétate de vinyle saponifié (B) se situe dans l'intervalle allant de 60:40 à 99,9:0,1,
la quantité de sel métallique d'acide gras supérieur (C) se situe dans l'intervalle allant de 0,0001 à 10 parties en masse par 100 parties en masse du total de la polyoléfine (A) et le copolymère éthylène-acétate de vinyle saponifié (B), et
la quantité de composé polyène conjugué (D) se situe dans l'intervalle allant de 0,000001 à 1 partie en masse par 100 parties en masse du total de la polyoléfine (A) et le copolymère éthylène-acétate de vinyle saponifié (B).

2. Composition de résine selon la revendication 1, comprenant en outre un composé hydrotalcite (E) dans l'intervalle allant de 0,0001 à 10 parties en masse par 100 parties en masse du total de la polyoléfine (A) et le copolymère éthylène-acétate de vinyle saponifié (B) ayant une teneur en éthylène de 20 à 65% en moles et ayant un degré de saponification des unités acétate de vinyle de 96% ou plus.

3. Composition de résine selon la revendication 1 ou 2, comprenant en outre 0,3 partie en masse ou plus d'un copolymère éthylène-acétate de vinyle saponifié (F) ayant une teneur en éthylène de 68 à 98% en moles et ayant un degré de saponification des unités acétate de vinyle de 20% ou plus, par 100 parties en masse du total de la polyoléfine (A) et le copolymère éthylène-acétate de vinyle saponifié (B) ayant une teneur en éthylène de 20 à 65% en moles et ayant un degré de saponification des unités acétate de vinyle de 96% ou plus.

4. Structure multicouche ayant au moins deux couches comprenant une couche faite de la composition de résine selon l'une quelconque des revendications 1 à 3 et une couche faite d'un copolymère éthylène-acétate de vinyle saponifié ayant une teneur en éthylène de 20 à 65% en moles et ayant un degré de saponification des unités acétate de vinyle de 96% ou plus.
